# EUROPEAN PATENT APPLICATION

(11) **EP 4 632 156 A1**
(43) Date of publication of application: **15.10.2025**
(21) Application number: 25169078.0
(22) Date of filing: 08.04.2025
(51) Int. Cl.: E02F 3/36, E02F 3/413, E02F 3/43, E02F 9/26

(54) **AUTOMATIC GRAB ASSISTANCE SYSTEM FOR CONSTRUCTION MACHINERY AND AUTOMATIC GRAB ASSISTANCE CONTROL METHOD FOR CONSTRUCTION MACHINERY**

(30) Priority: 09.04.2024 KR 20240048305
(71) Applicant: Volvo Construction Equipment AB, 631 85 Eskilstuna (SE)
(72) Inventor: KIM, Jiyun, 51710 CHANGWON-SI (KR); KIM, Inwoo, 51710 CHANGWON-SI (KR)
(74) Representative: Lavoix

(57) **Abstract**

An aspect of the present disclosure is an automatic grab assistance system for construction machine comprising a working device having a lower driving body, an upper swivel body rotatably coupled to the lower driving body about a first rotation axis, and a boom rotatably coupled to the upper swivel body about a second rotation axis, an arm rotatably coupled to a front end of the boom about a third rotation axis, and a grapple as an attachment rotatably coupled to a front end of the arm about a fourth rotation axis, and there is provided an automatic grab assistance system for construction machine comprising a sensor unit for detecting posture information of the construction machine, a point cloud sensing device for photographing a three-dimensional point cloud of an object to be grabbed, and an electronic control device for calculating a center of gravity area of the object based on point cloud data obtained from the point cloud sensing device and controlling driving of the upper swivel body and the working device so that the grapple is aligned with the center of gravity area of the object.

## Description

### Technical Field

The present disclosure generally relates to construction machine. In certain aspects, the present disclosure relates to an automatic grab assistance system for construction machine and an automatic grab assistance control method for construction machine. The present disclosure may be applied to large vehicles such as trucks, buses, and construction equipment. Although the present disclosure may be described for a particular vehicle, the present disclosure is not limited to any particular vehicle.

### Background

In general, an excavator is a construction machine that performs various tasks such as excavating the ground, loading the soil, excavating the foundation, dismantling the building, stopping the ground, leveling the ground, and catching an object at a construction site.

A grapple configured in various shapes capable of gripping and rotating is mounted on an excavator and used to easily hold the object when holding the object. Grapple is a kind of gripping device commonly referred to as claws and is used when block construction, loading and unloading wood, blocks, hume pipes, water pipes, and the like, or collecting scrap metal, and the like in a junkyard.

In order to efficiently lift the object, it is important to grip the center of gravity of the object with a grapple, but since the operator traditionally works by feeling the center of gravity of the object, there is a problem in that the efficiency of work is achieved differently depending on the operator.

### Summary

According to a first aspect of the present disclosure, there is provided an automatic grab assistance system for construction machine, comprising a working device having a lower driving body, an upper swivel body rotatably coupled to the lower driving body about a first rotation axis, and a boom rotatably coupled to the upper swivel body about a second rotation axis, an arm rotatably coupled to a front end of the boom about a third rotation axis, and a grapple as an attachment rotatably coupled to a front end of the arm about a fourth rotation axis, the automatic grab assistance system for construction machine comprising a sensor unit for detecting posture information of the construction machine, a point cloud sensing device for photographing a three-dimensional point cloud of an object to be grabbed, and an electronic control device for calculating a center of gravity area of the object based on point cloud data obtained from the point cloud sensing device and controlling driving of the upper swivel body and the working device so that the grapple is aligned with the center of gravity area of the object. A first aspect of the present disclosure may pursue an automatic grab assistance system of construction machine that assists an operator in grabbing and lifting operations. The technical advantage is that the grapple is automatically aligned with the center of gravity area of the object without the operator having to recognize the center of gravity of the object as a sense, thereby increasing the accuracy and work efficiency of grabbing and lifting operation of the object.

Optionally, in some examples, the electronic control device may calculate a reference vector that is a reference for alignment along the circumference of the center of gravity area of the object.

Alternatively, in some examples, the first reference vector may be formed to vertically pass through a reference point located at an upper end of the center of gravity area, and the second reference vector may be perpendicular to the first reference vector and may be formed to pass through a side end of the center of gravity area.

Alternatively, in some examples, the electronic control device may control driving of the upper swivel body and the working device so that a first grapple vector passing through a center point of the grapple in a central axis direction of the grapple is aligned with the first reference vector, and a second grapple vector perpendicular to the first grapple vector and passing through the center point of the grapple in a width direction of the grapple is aligned with the second reference vector.

Alternatively, in some examples, the electronic control device may control driving of the working device so that the center point of the grapple is close to the reference point when the first grapple vector is aligned with the first reference vector and the second grapple vector is aligned with the second reference vector.

Optionally, in some examples, the electronic control device may compare the object with pre-stored data to calculate a risk area that may be damaged when the object is grabbed.

Optionally, in some examples, a display for displaying the object as an image may be further included, and the display may display a center of gravity area and a risk area of the object. The technical advantage is that an operator can identify a damage risk area of an object in advance through a display, thereby reducing the possibility of damage to the object during grab and lifting operations.

Optionally, in some examples, the attachment may further comprise a tilt device coupled to the front end of the arm and tiltable left and right around a fifth rotation axis, and the grapple may be mounted on the tilt device.

Optionally, in some examples, the attachment may further comprise a tilt device coupled to the front end of the arm and tiltable left and right around a fifth rotation axis and a rotator device mounted on the tilt device and rotatable around a sixth rotation axis, and the grapple may be mounted on the rotator device.

According to a second aspect of the present disclosure, there is provided an automatic grab assistance control method for construction machine, comprising: a working device equipped with a lower driving body, an upper swivel body rotatably coupled to the lower driving body about a first rotation axis, and a boom rotatably coupled to the upper swivel body about a second rotation axis, an arm rotatably coupled to a front end of the boom about a third rotation axis, and a grapple as an attachment rotatably coupled to a front end of the arm about a fourth rotation axis, the automatic grab assistance control method for construction machine comprising a step S10 of photograppleing an object to be gripped, a step S20 of calculating a center of gravity area of the object based on the photograppleed image, and a step S30 of controlling driving of the upper swivel body and the working device so that the grapple is aligned with the center of gravity area of the object.

Optionally, in some examples, step S30 may further comprise step S31 of calculating a first reference vector formed to vertically pass through a reference point located at an upper center of the center of gravity area and a second reference vector perpendicular to the first reference vector and formed to pass through a side end of the center of gravity area.

Alternatively, in some examples, step S30 may further comprise step S32 of controlling driving of the upper swivel body and the working device such that a first grapple vector coincident with the sixth rotation axis and passing through a center point of the grapple in a central axis direction of the grapple is aligned with the first reference vector, and a second grapple vector perpendicular to the first grapple vector and passing through the center point of the grapple in a width direction of the grapple is aligned with the second reference vector.

Optionally, in some examples, step S30 may further comprise step S33 of controlling driving of the working device so that the center point of the grapple is close to the reference point.

Optionally, in some examples, the attachment may further comprise a tilt device coupled to the front end of the arm and tiltable left and right around a fifth rotation axis, and the grapple may be mounted on the tilt device.

Optionally, in some examples, the attachment may further comprise a tilt device coupled to the front end of the arm and tiltable left and right around a fifth rotation axis and a rotator device mounted on the tilt device and rotatable around a sixth rotation axis, and the grapple may be mounted on the rotator device.

The above aspects, appended claims, and/or examples disclosed herein above and later may be appropriately combined with each other, as would be apparent to a person skilled in the art.

Additional functions and advantages are disclosed in the following description, claims, and drawings, and will be recognized in part by those skilled in the art by carrying out the disclosure as readily apparent to or described herein.

### Brief Description of the Drawings

With reference to the accompanying drawings, a more detailed description of aspects of the present disclosure, hereinafter referred to as examples, is followed.
FIG. 1 is a schematic diagram of a construction machine performing the task of grabbing an object according to an embodiment of the present invention.
FIG. 2 is a drawing schematically illustrating the overall configuration of an automatic grab assistance system for construction machine according to an embodiment of the present invention.
FIG. 3 is a block diagram of an electronic control device according to an embodiment of the present invention.
FIG. 4 is a drawing illustrating an object extracted from point cloud data by an electronic control device according to an embodiment of the present invention.
FIG. 5 is a drawing illustrating a reference vector of an object calculated by an electronic control device according to an embodiment of the present invention.
FIG. 6 is a drawing illustrating a center of gravity area and a risk area of a cuboid type hume pipe displayed on a display.
FIG. 7 is a drawing illustrating a center of gravity area and a risk area of a cylindrical hume pipe displayed on a display.
FIG. 8 is a drawing illustrating a grapple vector calculated by an electronic control device according to an embodiment of the present invention.
FIGs. 9a and 9b are drawings illustrating a process of aligning the grapple according to an embodiment of the present invention to a center of gravity area of a cuboid type hume pipe.
FIGS. 10a and 10b are drawings illustrating a process of aligning the grapple according to an embodiment of the present invention to a center of gravity area of a cylindrical type hume pipe.
FIG. 11 is a step diagram illustrating an automatic grab assistance control method of construction machine.

### Detailed Description

The aspects described below represent the information needed to enable a person with ordinary skills in the art to practice the present disclosure.

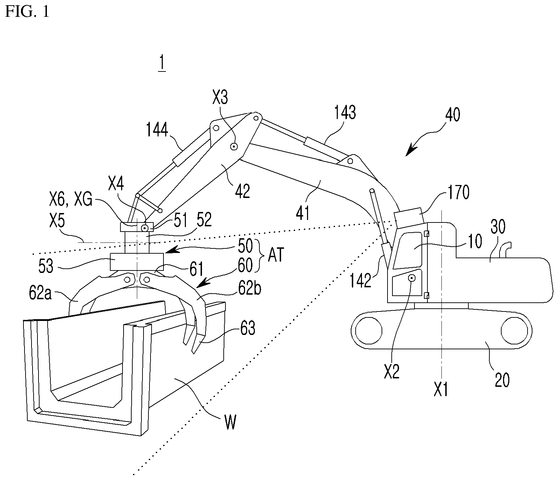

FIG. 1 is a perspective view showing a construction machine according to an embodiment of the present invention.

Referring to FIG. 1, a construction machine 1 comprises an operating room 10, a lower driving body 20, an upper swivel body 30 pivotally installed on the lower driving body 20 about a first rotation axis X1, and a working device 40 operatively installed on the upper swivel body 30 in a vertical direction.

The lower driving body 20 may be, for example, a crawler or a wheel type.

The working device 40 is formed as a multi-joint structure and comprises a boom 41 mounted on the upper swivel body 30 and rotatably supported about a second rotation axis X2 disposed at a rear end of the boom 41, an arm 42 rotatably supported about a third rotation axis X3 disposed at a front end of the boom 41 or a rear end of the arm 42, and an attachment AT rotatably supported about a fourth rotation axis X4 disposed at a front end of the arm 42.

The attachment AT may be, for example, a bucket, which is suitable for excavating the soil, and may comprise various types such as a breaker, a drill, a grab, a crusher, a tilt-rotator, and a grapple in addition to the bucket, and an optimal attachment may be attached to the arm 42 depending on the type of specific work to be performed. Hereinafter, an embodiment in which the tilt-rotator 50 and the grapple 60 are mounted as the attachment AT at the front end of the arm 42 will be described.

Specifically, the tilt-rotator 50 may comprise a clamper 51 coupled to the front end of the arm 42, a tilt device 52 equipped with a tilt actuator, and a rotator device 53 equipped with a rotator actuator.

The tilt device 52 is provided at the bottom of the clamper 51 and by driving a pair of tilt actuators, the rotator device 53 and the grapple 60 may be tilted left and right about the fifth rotation axis X5.

In addition, the rotator device 53 is provided at the bottom of the tilt device 52 and comprises a worm wheel, a worm engaged with the worm wheel, and a rotating actuator for driving the worm. When the worm rotates according to driving of the rotator actuator, the worm wheel engaged with the worm also rotates, so that the grapple 60 fastened to the rotator actuator rotates about the sixth rotation axis X6.

The grapple 60 may comprise a hinge unit 61 mounted on a lower part of the rotator device 53 and a pair of claws 62a and 62b. Since the tilt-rotator 50 and the grapple 60 are fastened to each other in a parallel state, the rotation axis X6 of the tilt-rotator 50 is the same as the central axis XG of the grapple 60.

Since the claws 62a and 62b rotate around the hinge unit 61 to perform opening or gripping operation, the object W is picked up and transported or constructed. A pair of gripping parts 63 may be provided at the end of each claws 62a and 62b.

Meanwhile, the attachment AT is not limited to the above-described embodiment. For example, the attachment AT may consist of a grapple 60. In this case, the grapple 60 may be coupled to the front end of the arm 42. In addition, the attachment AT may consist of a tilt device 52 and a grapple 60. In this case, the grapple 60 may be provided at the bottome of the tilt device 52.

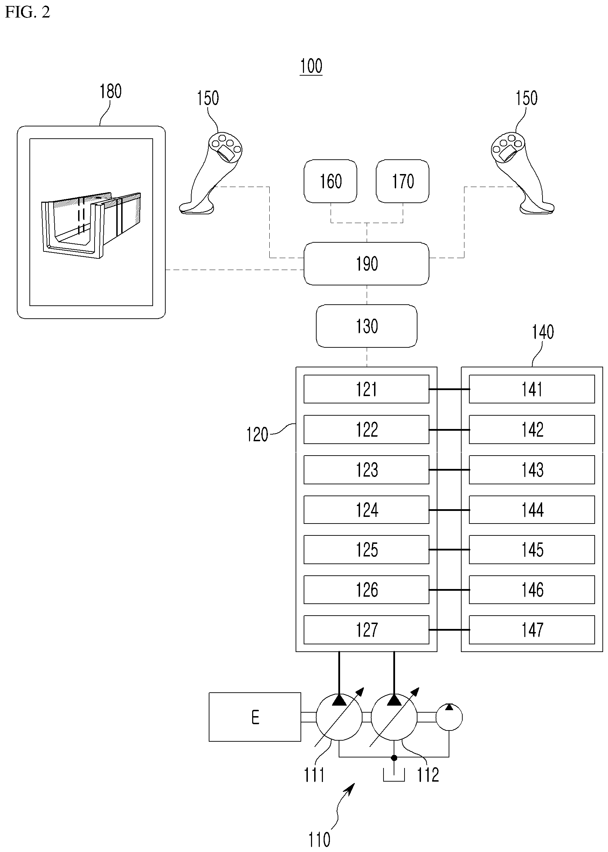

FIG. 2 is a drawing schematically illustrating the overall configuration of an automatic grab assistance system for construction machine according to an embodiment of the present invention.

Referring to FIG. 2, the automatic grab assistance system 100 for construction machine may comprise a hydraulic pump 110, a control valve unit 120, an electronic proportional decompression valve 130, a hydraulic actuator 140, an operation lever 150, a sensor unit 160, a point cloud sensing device 170, a setting unit 180, and an electronic control device 190.

The hydraulic pump 110 is driven by the engine E and discharges high-pressure operating fluid for operating the hydraulic actuator 140. The hydraulic pump 110 may comprise first and second hydraulic pumps 111 and 112.

The control valve unit 120 is a member that opens and closes the flow path by a spool that moves in the axial direction by receiving the hydraulic pressure of the operating fluid discharged from the hydraulic pump 110.

The control valve unit 120 may comprise a first control valve 121 to a seventh control valve 127. The control valve unit 120 is connected to the hydraulic pump 110 through a hydraulic line, and induces the supply of operating fluid from the hydraulic pump 110 to the hydraulic actuator 140. That is, each control valve controls the supply of operating fluid to a swing actuator 141, a boom actuator 142, an arm actuator 143, a bucket actuator 144, a tilt actuator 145, a rotator actuator 146, and a grapple actuator 147.

The electronic proportional decompression valve 130 is an electronically operated valve, and generates a pilot signal pressure proportional to the intensity of a control signal applied by the electronic control unit 190, for example, the intensity of a current, and the generated pilot signal pressure is transmitted to each control valve of the control valve unit 120. The pilot signal pressure from the electronic proportional decompression valve 130 axially moves the spool in the control valve unit 120.

The hydraulic actuator 140 comprises a swing actuator 141, a boom actuator 142, an arm actuator 143, a bucket actuator 144, a tilt actuator 145, a rotator actuator 146, and a grapple actuator 147.

In detail, referring to FIGs. 1 and 2, when the operating fluid is supplied to the swing actuator 141, the upper swivel body 30 may rotate about the first rotation axis X1. When the operating fluid is supplied to the boom actuator 142, the boom 41 may rotate about the second rotation axis X2. When the operating fluid is supplied to the arm actuator 143, the arm 42 may rotate about the third rotation axis X3. When the operating fluid is supplied to the bucket actuator 144, the tilt-rotator 50 may rotate about the fourth rotation axis X4. When the operating fluid is supplied to the tilt actuator 145, the tilt device 52 may rotate left and right around the fifth rotation axis X5. When the operating fluid is supplied to the rotator actuator 146, the rotator device 53 may rotate about the sixth rotation axis X6. When the operating fluid is supplied to the grapple actuator 147, the claws 62a and 62b of the grapple 60 may rotate around the hinge unit 61 to perform an opening or gripping operation.

The operation lever 150 may be a hydraulic joystick or an electric joystick, and preferably, may be an electric joystick that generates an electrical signal in proportion to the amount of operation of the operator and provides it to the electronic control device 190.

In an embodiment, a switch having various functions may be provided on the operation lever 150, and for example, a switch for activating the automatic grab mode may be provided.

The sensor unit 160 may comprise a Global Navigation Satellite System (GNSS) sensor and a posture measurement sensor.

The GNSS sensor may detect the current location and posture of the construction machine in real time. Specifically, the GNSS sensor may measure the current latitude, longitude, and altitude of the construction machine in real time to detect the current location of the construction machine in real time. In addition, the GNSS sensor may detect the current posture of the construction machine in real time. The real-time information on the current location and posture of the construction machine detected by GNSS sensor may be digital data.

The posture measurement sensor may measure the displacement, posture, and/or angle of the upper swivel body, boom, arm, and bucket using Inertial Measurement Unit (IMU), angle sensors, and the like. For example, the posture measurement sensor may be disposed on each of the upper swivel body, the boom, the arm, the tilt-rotator, and the grapple to detect the displacement, posture, and/or angle of each of the upper swivel body, the boom, the arm, the tilt-rotator, and the grapple.

The information measured by the sensor unit 160 is provided to the electronic control device 190.

The point cloud sensing device 170 may sense a three dimensional point cloud. Here, the point cloud may be a data set on a coordinate system. The point cloud is a set of points, and records the time of returning by sending light or signals to object and data collected through a camera or lidar, and the like, and calculates distance information per light or signal to generate one point. The point cloud may mean a three-dimensional set of points.

The point cloud sensing device 170 comprises one or more of lidar, radar, and camera mounted on the construction machine 1 to detect an object in front of the construction machine 1.

The point cloud sensing device 170 acquires a point cloud of a work object, and transmits the acquired data to the electronic control device 190.

The setting unit 180 may be configured with a display provided inside the operating room, and through this, the operator may activate the automatic grab assistance mode of the construction machine.

In the setting unit 180, a button for activating the automatic grab assistance mode may be displayed on the display, and the operator may push it to turn on or off the grab assistance mode. However, the button on the display may be configured as a switch.

In addition, information indicating whether the grab assistance mode is operated may be displayed on the setting unit 180.

Preferably, the setting unit 180 may also display real-time information on the current location and posture of the construction machine detected by the sensor unit 160, or information on the center of gravity of the object, information on the area at risk of damage, or the like.

The electronic control unit 190 generates an electrical signal and outputs it to the electronic proportional decompression valve 130, and the electronic proportional decompression valves 130 respectively supply pilot signal pressure proportional to the intensity of the current applied by the electronic control unit 190 to the spools of the control valve unit 120, thereby moving the spools of the control valve unit 120 according to the intensity of the applied pilot signal pressure.

When the automatic grab assistance mode is activated in the operation lever 150 or the setting unit 180, the electronic control device 190 controls the driving of the hydraulic actuator 140, that is, the driving of the upper swivel body and the working device so that the grapple is aligned with the center of gravity area of the object.

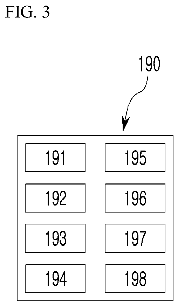

FIG. 3 is a block diagram of an electronic control device.

Referring to FIG. 3, the electronic control device 190 may comprise a data receiving unit 191, a storage unit 192, a point cloud processing unit 193, a center of gravity analysis unit 194, a risk area analysis unit 195, a grapple vector calculation unit 196, a grapple alignment unit 197, and an output unit 198.

Referring to FIGs. 2 and 3, the data receiving unit 191 may receive information detected by the sensor unit. The data receiving unit 191 may receive digital data such as the current latitude, longitude, altitude of the unmanned excavator and current posture of the unmanned excavator detected by the GNSS sensor, the location and/or posture of the upper swivel body, the boom, the arm, and the bucket detected by the posture measurement sensor, and the body tilt of the construction machine in real time.

The data receiving unit 191 may receive the point cloud data obtained by the point cloud sensing device 170.

The data receiving unit 191 may receive an operation signal output from the operation lever or a grab assistance mode operation signal activated at the operation lever or the setting unit.

Meanwhile, the storage unit 192 may store in advance a risk area having a risk of damage to several objects. For example, the storage unit may store information indicating that the risk area of the rectangular hume pipe is located at the upper end and the rear end of the hume pipe. In addition, the storage unit may store information indicating that the risk area of the cylindrical type hume pipe is located at the rear end of the hume pipe.

In addition, the storage unit 192 may store a margin value used when calculating the width of the claws.

Meanwhile, the point cloud processing unit 193 may process the point clouds so as to identify the space of the three-dimensional object through the point cloud data.

The point cloud processing unit 193 may calculate information on the shape, profile, location, volume, and the like of the object.

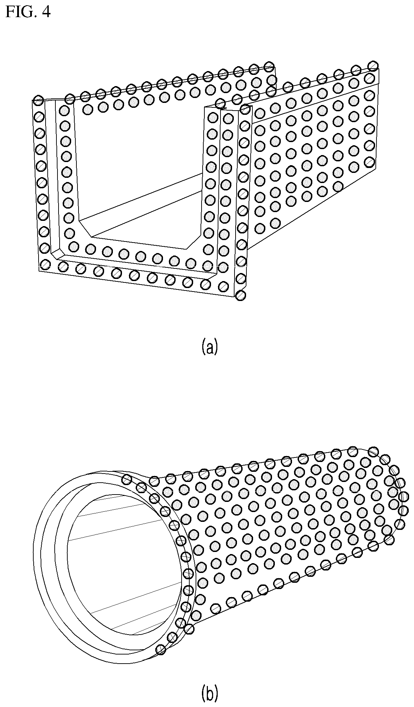

FIG. 4 is a drawing illustrating an object extracted from point cloud data by an electronic control device according to an embodiment of the present invention.

As shown in FIG. 4, the point cloud processing unit may extract an object from the acquired point cloud data.

Meanwhile, the center of gravity analysis unit 194 analyzes the point cloud of the object extracted from the point cloud processing unit 193 to calculate a center of gravity area in which the center of gravity of the object is located. In addition, the center of gravity analysis unit 194 calculates a reference vector that is a reference for alignment along the circumference of the center of gravity area.

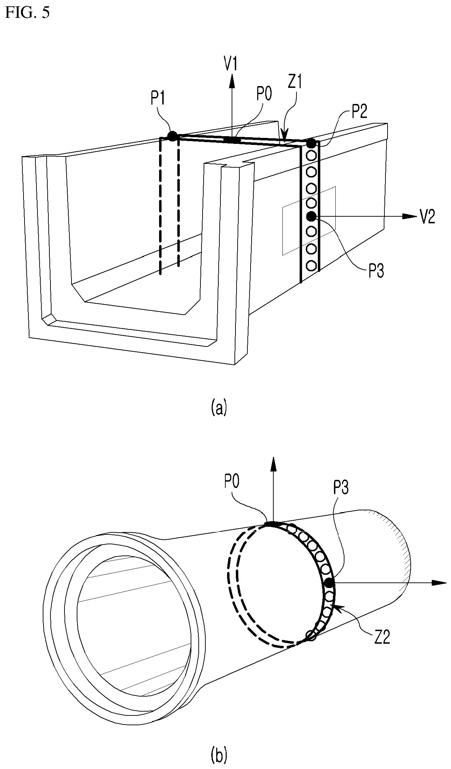

FIG. 5 is a drawing illustrating a reference vector of an object calculated by an electronic control device according to an embodiment of the present invention.

Referring to FIGs. 3 and 5(a), a rectangular center of gravity area Z1 may be located at an approximately center of a cuboid type hume pipe. The center of gravity analysis unit 194 calculates the center of the points P1 and P2 located at the upper ends of both sides among the points on the center of gravity area Z1 as the reference point P0. The center of gravity analysis unit 194 calculates a vector passing vertically through the reference point P0 located at the center upper end of the center of gravity area Z1 as a first reference vector V1. In addition, the center of gravity analysis unit 194 calculates a vector perpendicular to the first reference vector V1 and passing through the center side point P3 of the center of gravity area Z1 as a second reference vector V2. The object may be a cuboid type hume pipe as well as a cuboid type block.

Referring to FIGs. 3 and 5(b), a circular center of gravity area Z2 may be located at an approximately center of a cylindrical type hume pipe. The center of gravity analysis unit 194 calculates a point P0 located at the upper end among points on the center of gravity area Z2 as a reference point. The center of gravity analysis unit 194 calculates a vector passing vertically through the reference point P0 located at the center upper end of the center of gravity area Z2 as a first reference vector V1. In addition, the center of gravity analysis unit 194 calculates a vector perpendicular to the first reference vector V1 and passing through the center side point P3 of the center of gravity area Z2 as a second reference vector V2. The object may be a cylindrical type hume pipe as well as a cylindrical type tree.

Meanwhile, the risk area analysis unit 195 analyzes the type of the object extracted from the point cloud processing unit 193, and compares and analyzes the object risk area information stored in the storage unit 192 to calculate a risk area in which the object is at risk of damage.

In addition, the risk area analysis unit 195 may model a three-dimensional model or a two-dimensional model for the object based on the point cloud processed by the point cloud processing unit 193. The risk area analysis unit 195 may display the risk area on the three-dimensional model or the two-dimensional model.

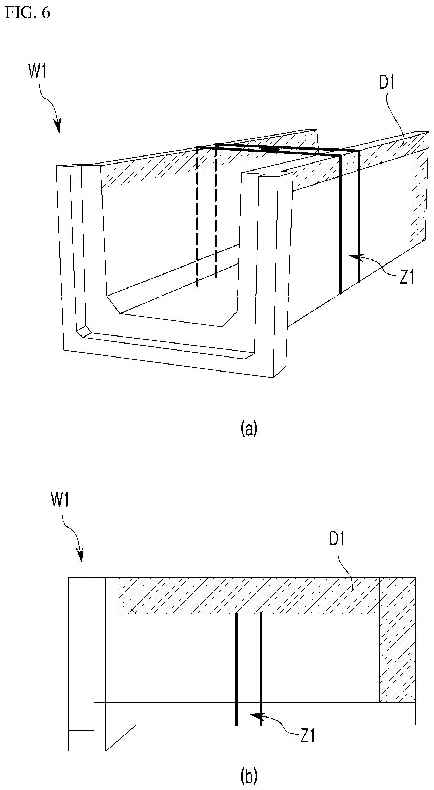

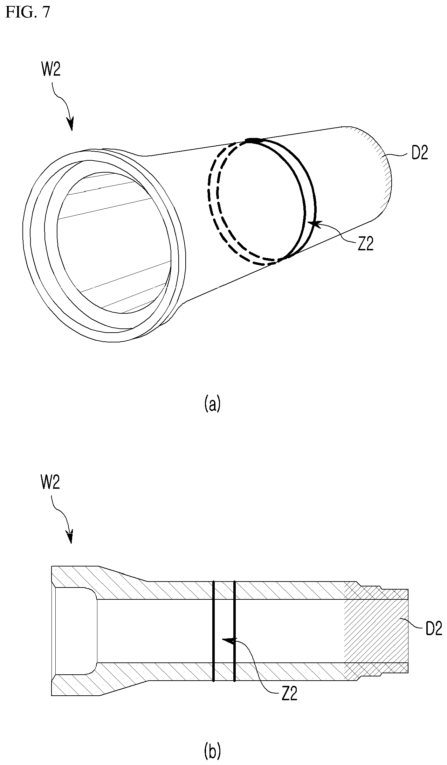

FIG. 6 is a drawing illustrating a center of gravity area and a risk area of a cuboid type hume pipe displayed on a display, and FIG. 7 is a drawing illustrating a center of gravity area and a risk area of a cylindrical type hume pipe displayed on a display.

Referring to FIG. 6, a center of gravity area Z1 having a rectangular shape may be displayed on the display in the three-dimensional model or the two-dimensional model of the hume pipe W1, and a risk area D1 may be displayed on the upper end and the rear end of the hume pipe W1.

Referring to FIG. 7, a center of gravity area Z2 having a circular shape may be displayed on the display in a three-dimensional model or a two-dimensional model of the hume pipe W2, and a risk area D2 may be displayed on a rear end of the hume pipe W2.

Meanwhile, the grapple vector calculation unit 196 calculates a grapple vector to be aligned with the first and second reference vectors of the object.

The grapple vector calculation unit 196 calculates a grapple vector based on digital data such as the current latitude, longitude, altitude of the unmanned excavator and current posture of the unmanned excavator detected by the GNSS sensor, the location and/or posture of the upper swivel body, the boom, the arm, and the bucket detected by the posture measurement sensor, and the body tilt of the construction machine received by the data receiving unit 191.

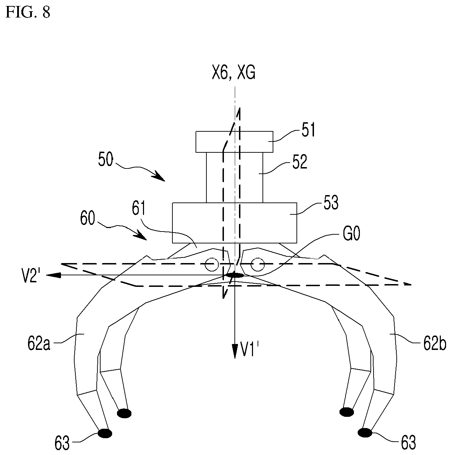

FIG. 8 is a drawing illustrating a grapple vector calculated by an electronic control device according to an embodiment of the present invention.

Referring to FIGs. 3 and 8, the grapple vector calculation unit 196 calculates a vector coinciding with the sixth rotation axis X6 of the tilt-rotator 50 as a first grapple vector V1'. Alternatively, the grapple vector calculation unit 196 calculates a vector coinciding with the central axis XG of the grapple 60 as a first grapple vector V1'. The first grapple vector V1' is formed to pass through a center point of the hinge unit 61, that is, a center point G0 of the grapple 60. The grapple vector calculation unit 196 calculates a vector passing through the center point G0 of the grapple 60 in a direction perpendicular to the first grapple vector V1' as a second grapple vector V2'. The second grapple vector V2' extends in the width direction of the claws 62a and 62b.

Meanwhile, the grapple alignment unit 197 may calculate a pilot signal pressure for aligning the grapple vector to the first and second reference vectors of the object.

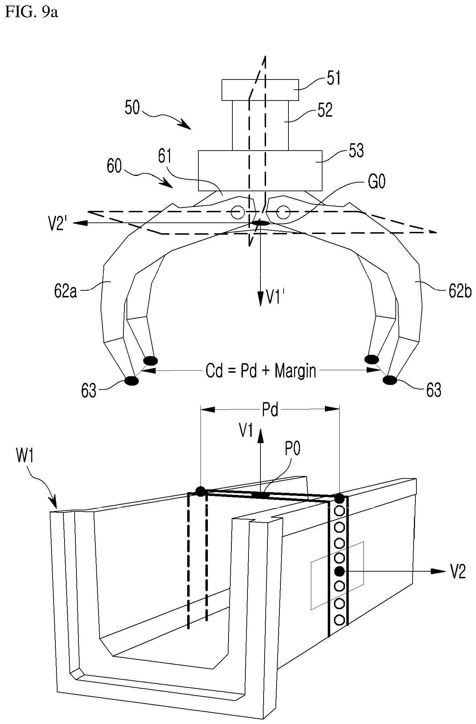

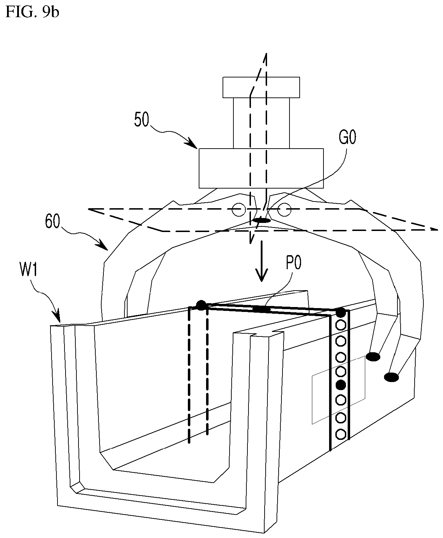

FIGs. 9a and 9b are drawings illustrating a process of aligning the grapple according to an embodiment of the present invention to a center of gravity area of a cuboid type hume pipe.

Referring to FIGs. 3 and 9a, the grapple alignment unit 197 may calculate a pilot signal pressure for driving the upper swivel body and the working device so that a first grapple vector V1' is aligned with the first reference vector V1 and a second grapple vector V2' is aligned with the second reference vector V2.

In addition, the grapple alignment unit 197 may calculate a pilot signal pressure for driving the grapple 60 so that the width Cd of the gripping unit 63 of a pair of claws 62a and 62b is equal to or greater than the width Pd of the cuboid type hume pipe. Preferably, the width Cd of the claws 62a and 62b may be calculated by adding a predetermined margin to the width Pd of the hume pipe.

Referring to FIGs. 3 and 9a, the grapple alignment unit 197 may calculate a pilot signal pressure for driving the working device so that the center point G0 of the grapple 60 reaches the reference point P0 of the object.

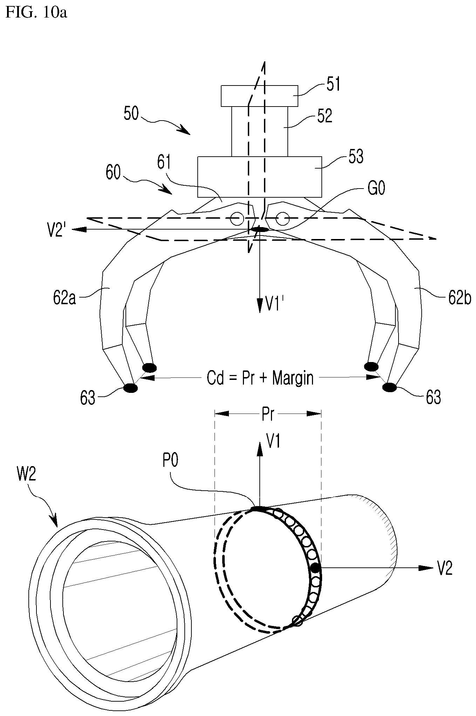

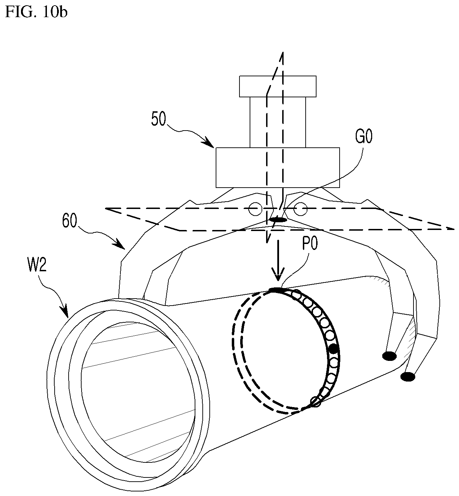

FIGs. 10a and 10b are drawings illustrating a process of aligning the grapple according to an embodiment of the present invention to a center of gravity area of a cylindrical type hume pipe.

Referring to FIGs. 3 and 10a, the grapple alignment unit 197 may calculate a pilot signal pressure for driving the upper swivel body and the working device so that a first grapple vector V1' is aligned with the first reference vector V1 and a second grapple vector V2' is aligned with the second reference vector V2.

In addition, the grapple alignment unit 197 may calculate a pilot signal pressure for driving the grapple 60 so that the width Cd of a pair of claws 62a and 62b is equal to or greater than the circumference Pr of the cylindrical type hume pipe. Preferably, the width Cd of the claws 62a and 62b may be calculated by adding a predetermined margin to the circumference Pr of the hume pipe.

Referring to FIGs. 3 and 10b, the grapple alignment unit 197 may calculate a pilot signal pressure for driving the working device so that the center point G0 of the grapple 60 reaches the reference point P0 of the object.

Meanwhile, the output unit 198 may generate a current corresponding to the pilot signal pressure calculated by the grapple alignment unit 197 and apply it to the electronic proportional decompression valve of the control valve of the upper swivel body and the working device. Accordingly, the amount of the operating fluid supplied to the hydraulic actuator of the upper swivel body and the working device is controlled, thereby controlling the driving of the upper swivel body and the working device.

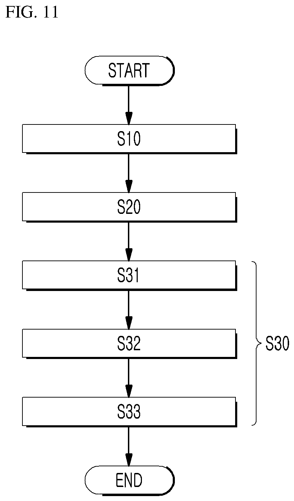

FIG. 11 is a step diagram illustrating an automatic grab assistance control method of construction machine.

An automatic grab assistance control method of construction machine may comprise a step of photographing an object to be grabbed (S10), a step of calculating a center of gravity area of the object based on the photographed image (S20), and a step of controlling the driving of the upper swivel body and the working device so that the grapple is aligned with the center of gravity area of the object (S30).

Step S30 may comprise step of calculating a first reference vector formed to vertically pass through a reference point located at an upper center of the center of gravity area and a second reference vector perpendicular to the first reference vector and formed to pass through a side end of the center of gravity area (S31).

Step S30 may further comprise step of controlling the driving of the upper swivel body and the working device so that a first grapple vector coincident with the central axis of the grapple is aligned with the first reference vector, and a second grapple vector formed to be perpendicular to the first grapple vector and to pass through the end of the claw of the grapple is aligned with the second reference vector (S32).

Step S30 may further comprise controlling the driving of the working device so that the center point of the grapple formed on the central axis of the grapple reaches the reference point (S33).

According to the grab assistance system for construction machine and the grab assistance control method for construction machine by an embodiment of the present invention, the accuracy and work efficiency of grabbing and lifting operation of an object is increased since the grapple is automatically aligned with the center of gravity area of the object without an operator having to recognize the center of gravity of the object as a sense.

Further, an operator can identify a damage risk area of an object in advance through a display, thereby the possibility of damage to the object during grabbing and lifting operations is reduced.

The terms used herein are those used to describe only certain aspects and are not intended to limit the present disclosure. As used herein, a "a", "one", "the" which is a singular form, is intended to include a plural form as well, unless the context clearly indicates otherwise. As used herein, the term "and/or" includes all combinations of any one or more of the associated listed items. It will also be understood that the terms "comprises", "comprising", "includes", and/or "including", when used herein, specify the presence of a stated functional unit, integer, step, operation, element, and/or component, but do not preclude the presence or addition of one or more other functional unit, integer, step, operation, element, component, and/or group thereof.

While terms such as first, second, and the like may be used herein to describe various components, it will be understood that these elements should not be limited by these terms. These terms are used only to distinguish one element from another. For example, a first component may be referred to as a second component, and similarly, a second component may be referred to as a first component, without departing from the scope of the present disclosure.

Relative terms such as "below" or "above" or "upper" or "lower" or "horizontal" or "vertical" may be used herein to describe the relationship of one element to another element as illustrated in the drawings. It will be understood that these terms and the terms discussed above are intended to include different orientations of the device in addition to the orientations shown in the drawings. If an element is referred to as being "connected" or "coupled" to another element, it will be understood that it may be directly connected or coupled to another element, or there may be an intervening element. In contrast, where an element is referred to as being "directly connected" or "directly coupled" to another element, there is no intervening element.

Unless otherwise defined, all terms (including technical terms and scientific terms) used herein have the same meanings as those generally understood by those of ordinary skill in the art to which the present disclosure pertains. It will also be understood that the terms used herein should be interpreted as having meanings consistent with their meanings in the context of the present specification and the related art, and will not be interpreted in idealized or overly formal meanings unless explicitly defined herein.

## Claims

1. An automatic grab assistance system for construction machine comprising a working device having a lower driving body, an upper swivel body rotatably coupled to the lower driving body about a first rotation axis, a boom rotatably coupled to the upper swivel body about a second rotation axis, an arm rotatably coupled to a front end of the boom about a third rotation axis, and a grapple as an attachment rotatably coupled to a front end of the arm about a fourth rotation axis, comprising:
a sensor unit for detecting posture information of the construction machine;
a point cloud sensing device for photograppleing a three-dimensional point cloud of an object to be grabbed; and
an electronic control device calculating a center of gravity area of the object based on point cloud data obtained from the point cloud sensing device and controlling driving of the upper swivel body and the working device so that the grapple is aligned with the center of gravity area of the object.

2. The automatic grab assistance system for construction machine of claim 1,
wherein the electronic control unit
calculates a reference vector that is a reference for alignment along a circumference of the center of gravity area of the object.

3. The automatic grab assistance system for construction machine of claim 2,
wherein a first reference vector is formed to vertically pass through a reference point located at an upper end of the center of gravity area, and
wherein a second reference vector is perpendicular to the first reference vector and is formed to pass through a side end of the center of gravity area.

4. The automatic grab assistance system for construction machine of claim 3,
wherein the electronic control unit
controls driving of the upper swivel body and the working device so that a first grapple vector passing through a center point of a grapple in a direction of a central axis of the grapple is aligned with the first reference vector, and a second grapple vector perpendicular to the first grapple vector and passing through the center point of the grapple in a width direction of the grapple is aligned with the second reference vector.

5. The automatic grab assistance system for construction machine of claim 4,
wherein the electronic control unit
, when the first grapple vector is aligned with the first reference vector and the second grapple vector is aligned with the second reference vector,
controls the driving of the working device so that a center point of a grapple is close to a reference point.

6. The automatic grab assistance system for construction machine of claim 1,
wherein the attachment further comprises
a tilt device coupled to the front end of the arm and tiltable left and right around a fifth rotation axis, and
wherein the grapple is mounted on the tilt device.

7. The automatic grab assistance system for construction machine of claim 1,
wherein the attachment further comprises
a tilt device coupled to the front end of the arm and tiltable left and right around a fifth rotation axis and
a rotator device mounted on the tilt device and rotatable about a sixth rotation axis,
wherein the grapple is mounted on the roator device.

8. The automatic grab assistance system for construction machine of claim 1,
wherein the electronic control unit
compares an object with pre-stored data to calculate a risk area in which there is a risk of damage when the object is grabbed.

9. The automatic grab assistance system for construction machine of claim 8
further comprises a display for displaying an object as an image,
wherein the display displays a center of gravity area and a risk area of the object.

10. An automatic grab assistance control method for construction machine comprising a working device having a lower driving body, an upper swivel body rotatably coupled to the lower driving body about a first rotation axis, a boom rotatably coupled to the upper swivel body about a second rotation axis, an arm rotatably coupled to a front end of the boom about a third rotation axis, and a grapple as an attachment rotatably coupled to a front end of the arm about a fourth rotation axis, comprising:
photographing an object to be grabbed (S10);
calculating a center of gravity area of the object based on the photographed image (S20); and
controlling driving of the upper swivel body and the working device so that the grapple is aligned with a center of gravity area of the object (S30).

11. The automatic grab assistance control method for construction machine of claim 10,
wherein step S30 further comprises calculating a first reference vector formed to vertically pass through a reference point located at an upper center of the center of gravity area and a second reference vector perpendicular to the first reference vector and formed to pass through a side end of the center of gravity area (S31).

12. The automatic grab assistance control method for construction machine of claim 11,
wherein step S30 further comprises controlling driving of the upper swivel body and the working device so that a first grapple vector passing through a center point of a grapple in a direction of a central axis of the grapple is aligned with the first reference vector, and a second grapple vector perpendicular to the first grapple vector and passing through the center point of the grapple in a width direction of the grapple is aligned with the second reference vector (S32).

13. The automatic grab assistance control method for construction machine of claim 12,
wherein step S30 further comprises controlling driving of the working device so that the center point of the grapple is close to the reference point (S33).

14. The automatic grab assistance control method for construction machine of claim 10,
wherein the attachment further comprises
a tilt device coupled to the front end of the arm and tiltable left and right around a fifth rotation axis,
wherein the grapple is mounted on the tilt device.

15. The automatic grab assistance control method for construction machine of claim 10, wherein the attachment further comprises
a tilt device coupled to the front end of the arm and tiltable left and right around a fifth rotation axis and
a rotator device mounted on the tilt device and rotatable about a sixth rotation axis,
wherein the grapple is mounted on the rotator device.
